# EUROPEAN PATENT APPLICATION

(11) **EP 2 266 924 A1**
(43) Date of publication of application: **29.12.2010**
(21) Application number: 10166990.1
(22) Date of filing: 23.06.2010
(51) Int. Cl.: C02F 3/12, C02F 11/00

(54) **Method for treating effluent**

(30) Priority: 24.06.2009 GB 0910943
(71) Applicant: Eco-Solids International Limited, New Milton Hampshire BH25 6DX (GB)
(72) Inventor: Barratt, Peter Anthony, Overton, Hampshire RG25 3LH (GB)
(74) Representative: Elsy, David

(57) **Abstract**

The Inventor provides a process for the treatment of an effluent stream comprising:
(i) passing the effluent stream into an activated sludge basin;
(ii) removing at least a portion of activated sludge from the activated sludge basin;
(iii) pressurising at least a portion of the removed activated sludge in the presence of a gas to form pressurised activated sludge;
(iv) flash depressurising the pressurised activated sludge to form depressurised sludge; and
(v) returning at least a portion of the depressurised sludge to the activated sludge basin.

## Description

The invention relates to a process for the treatment of an effluent stream, such as a sewage stream in which the effluent treatment stream is treated via the use of an activated sludge basin and in which a portion of activated sludge from the activated sludge basin is pressurised and then depressurised before returning it to the activated sludge basin. Processes and apparatus for carrying out the invention are provided.

In the well established Activated Sludge Process (ASP) for the aerobic treatment of wastewater, excess sludge (predominantly the microorganisms within the Activated Sludge) is periodically withdrawn from the process. This is done to promote the growth of new microorganisms within the ASP, and so control the Sludge Age within the process.

The excess sludge so withdrawn constitutes so-called Surplus Activated Sludge (SAS) or Waste Activated Sludge (WAS). The SAS often constitutes additional costs to the ASP, as the water content of the SAS has to be reduced, in order to make the SAS easier to handle (as sludge cake), and to reduce the volume for disposal. This further processing involves significant energy inputs, and sometimes, the addition of chemicals to aid dewatering.

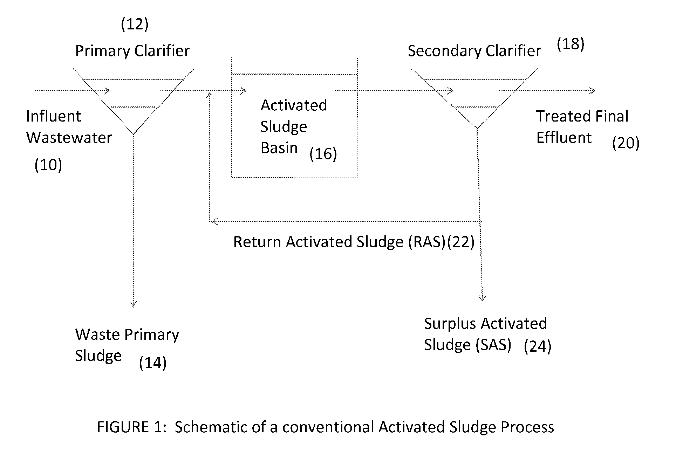

In many cases the dewatered SAS is viewed as a waste product of the ASP, and may have to undergo further treatment e.g. incineration, to render it safe for final disposal. The landfilling of SAS as a final disposal route is becoming less and less acceptable, as organic materials are diverted away from landfill. This is summarised in Figure 1.

The invention disclosed describes a method by which the volumes and mass of SAS from typical ASPs can be reduced within the ASP. This reduces the quantities of SAS for further treatment and disposal, and so the energy, chemicals and costs associated with these operations.

Conventional ASPs use a Return Activated Sludge (RAS) line from the sludge blanket in the secondary gravity clarifier(s) to the activated sludge basin(s). In more recent embodiments of the ASP, such as Membrane Bioreactors, some of the activated sludge is released from the process without prior settlement in a gravity clarifier. In any case, unless there are exceptional circumstances, SAS needs to be removed from the process.

The invention is applied to at least a proportion of the activated sludge, either withdrawn from the ASP, or as gravity settled sludge withdrawn from a secondary clarifier, or as gravity settled sludge being returned to the activated sludge basin (RAS). The proportion may be anywhere in the range 0.1 to 100% of the total sludge solids present in the ASP.

The invention utilises the pressurisation and rapid depressurisation of the returned activated sewage to disrupt the sludge flocculents and at least a portion of the individual microbial cells within the sludge. This causes an increase in the availability of cellular microbial biomass (notably dead microbial material) to microorganisms, thus increases the metabolism of the sludge solids within the activated sludge. This leads to an increase in conversion of sludge solids, which would otherwise be lost from the process with the surplus activated sludge to carbon dioxide and water. Utilisation of pressurisation and depressurisation is generally known in the art: WO 2005/113445 discloses a process for removing water from waste water sludge by passing the sludge through a chamber and injecting carbon dioxide into the chamber under pressure. The pressurised sludge with the carbon dioxide is then flash depressurised. This action serves to destroy microorganisms within the sludge. Further disinfection of the sludge is provided by the addition of acid to the depressurised sludge. This process results in disrupted sludge which is dewatered and may be further treated or disposed of. The waste water is separated and sent to a separate waste water treatment process.

WO 2007/059487 discloses another process in which a microorganism containing stream is pressurised and flash depressurised. Sludge may be dewatered and sent to an anaerobic digester where it is digested to produce methane.

Such processes have not been applied to the current invention.

The invention provides a process for the treatment of an effluent stream comprising:
(i) passing the effluent stream into an activated sludge basin;
(ii) removing at least a portion of activated sludge from the activated sludge basin;
(iii) pressurising at least a portion of the removed activated sludge in the presence of a gas to form pressurised activated sludge;
(iv) flash depressurising the pressurised activated sludge to form depressurised sludge; and
(v) returning at least a portion of the depressurised sludge to the activated sludge basin.

The effluent stream may potentially be any waste water comprising organic material including sewage. The composition of sewage depends upon its origin and the volume of water in which the wastes are carried. Waste which originates entirely from residential communities is made up of excreta, bathing and washing water and kitchen wastes. Other wastes can be present from rural/agricultural sources and/or industrial or commercial establishments.

Waste effluent may be subjected to a primary treatment, for example by passing through one or more screens or meshes to remove larger components of the sewage stream, passing through a comminutor which removes some of the excess water in the stream, passing through a grit chamber where heavier particles are removed and/or passing into a primary clarifier. Such primary treatments are generally known in the art. The waste stream may then be passed into an activated sludge basin. Activated sludge basins or tanks are where effluent streams are combined with organisms to develop a biological floc which reduces the organic content of the waste stream. Typically, atmospheric air or pure oxygen is bubbled through the activated sludge to assist with the biological processes of digesting or breaking down the material within the effluent stream. "Activated sludge" includes active biological material produced by the activated sludge basin and which affects all the purification processes. The material, which in healthy sludge is a brown floc, is largely composed of saprotrophic bacteria, but also typically contains a protozoan flora.

At least a portion of the activated sludge is removed from the activated sludge basin. This excess sludge is typically called surplus activated sludge or waste activated sludge.

The activated sludge may be removed from the surface of the activated sludge basin. It may also be settled sludge and/or sludge from a secondary clarifier used to treat waste water exiting the activated sludge basin.

At least a portion of the removed activated sludge is pressurised in the presence of a gas to form a surplus activated sludge. Pressurisation gas may be, for example, nitrogen or air, but is preferably carbon dioxide (or a gas mixture containing a proportion of carbon dioxide in excess of 10% by volume) as this has a relatively high solubility in the activated sludge.

The material is pressurised to above ambient. Typically the pressurised sludge is pressurised to 0-25, especially 0.5-10 barg. The pressurised sludge may be held or incubated for a period of time, for example at least 5 minutes, at least 15 minutes, at least 30 minutes, at least 1 hour, at least 2 hours, typically 20 minutes.

The pressurised sludge may be contained within the pressuriser where the gas was originally added or alternatively moved into a resident chamber which is maintained under pressure.

The pressurised sludge is then depressurised for example by flash depressurisation. That is, the pressure within the activated sludge is rapidly released. Flash depressurisation may be simply carried out by discharging into a vessel and/or pipeline at ambient or near ambient pressure. At this point in the process the pressure release typically causes the solid sludge particles to float as the dissolved gas appears as small gas bubbles. This can be used as a means to further concentrate the sludge in the means similar to generally known dissolved air flotation, so that the concentrated and treated sludge is returned to the activated sludge basin, and the more aqueous layer below is sent to a secondary clarifier or to the end of the process.

In any case the activated sludge, whether floated off as a more concentrated sludge, or not, passes back into the activated sludge basin.

Performing the application of gas and depressurisation to the sludge and releasing the pressure, gas dissolved in the sludge at pressure is released as small bubbles. These gas bubbles affect volume expansion, leading to local forces within the sludge flocs and the individual microbial cells within the sludge solids. This causes microbial cells to be disrupted and dead cells to be torn apart from living cells within sludge floes. This causes an increase in the availability of cellular microbial biomass (notably dead microbial material) to living microorganisms within the activated sludge basin. Thus an increase in the metabolism of the sludge solids within the activated sludge is produced.

Preferably the pressurisation and depressurisation step is not so harsh as to substantially sterilise the activated sludge. That is, it is desirable to have at least a portion of the microorganism community within the activated sludge still viable to allow the microorganisms to multiply and therefore increase the amount of microbial material capable of digesting the sludge with the activated sludge basin upon its return to the basin.

The presence of such increased soluble carbonaceous compounds and nutrients may require the addition of further oxygen or air to the activated sludge process in order to maintain an aerobic environment for the successful utilisation of the activated sludge in the basin. Typical oxygen levels need to be at least 1mg/l up to 8mg/l. Nitrification may also take place to typically at least 2mg/l.

Further additives, such as hydrogen peroxide, surface active compounds and sodium hydrochloride, may be added to the pressurised or depressurised sludge to kill microorganisms which have a negative effect on the activated sludge process (including filamentous bacteria causing sludge "bulking"), or to aid the dispersal and degradation of it upon feeding back to the activated sludge basin.

The invention also provides an apparatus for use in the method according to any preceding claim comprising an activated sludge basin, the activated sludge basin comprising an inlet port for receiving a flow of an effluent, an inlet port for receiving depressurised sludge and an outlet port, wherein the outlet port is connected to a secondary clarifier, which in turn is connected to a pressurisation chamber and the pressurisation chamber is then connected to a flash depressurisation chamber, wherein the flash depressurisation chamber is connected to the inlet port for receiving the depressurised sludge.

Preferably a residence chamber is provided between the pressurisation and the flash pressurisation chamber. The flash depressurisation may be a separate vessel in which the pressure is released or alternatively simply a pipe through which the material is passed into the activated sludge basin.

In the process or method of the invention, the activated sludge from the activated sludge basin may be passed into a secondary clarifier to allow solids to be separated from water which is then passed for further treatment or discharged. Such secondary clarifiers are generally known in the art. The solids may then be pressurised as described above.

The invention will now be described by way of example only, with reference to the following figures:
Figure 1 shows a schematic of a conventional activated sludge process.
Figure 2 shows a conventional activated sludge process incorporating a return activated sludge pressurisation and depressurisation step according to the invention.
Figure 1 shows a conventional activated sludge process.

Effluent waste stream, such as waste water is typically subjected to pre-treatment, such as passing through a mesh or passing into a primary clarifier (12) where primary waste sludge (14) is separated off. The effluent stream is then passed to an activated sludge basin (16). Organic material within the effluent stream is then subjected to microbial decomposition by the activated sludge within the activated sludge basin. Material is then passed to a secondary clarifier (18) where treated effluent is decanted off (20). Surplus activated sludge is drawn off the secondary clarifier (18) with some of the activated sludge (22) returned to the activated sludge basin (16) with surplus activated sludge (24) passed for further disposal. This surplus activated sludge requires further treatments, such as by drying, burning or landfill in order to dispose of it.

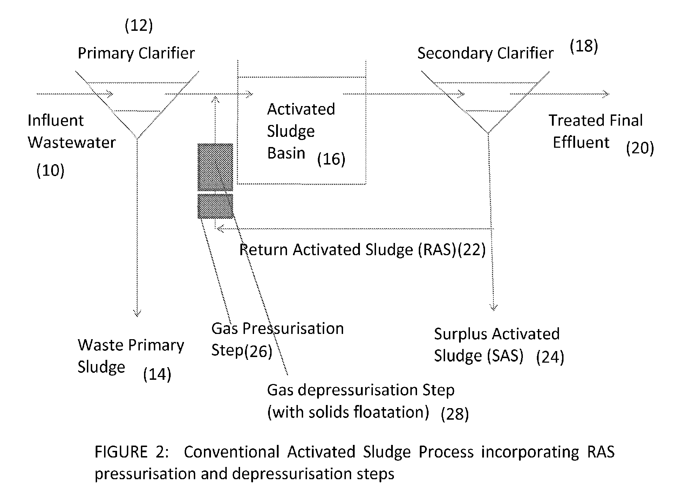

The current invention reduces the amount of surplus activated sludge. Figure 2 shows a typical arrangement of the device of the invention. The returned activated sludge (22) is passed into a gas pressurisation vessel (20). Here the activated sludge is pressurised utilising a gas, such as nitrogen or air, but more typically carbon dioxide. The pressurised activated sludge is typically incubated for a period of up to 24 hours in order to allow the gas to fully dissolve with the activated sludge and to permeate within, for example, the cell walls of bacterial microorganisms or indeed waste material. This may be within a separate residence chamber.

The pressurised material is then depressurised (28). The depressurisation step may be within a separate vessel such as depressurisation vessel or alternatively the depressurisation may simply be carried out within a pipe before returning to the activated sludge basin (16). Where the depressurisation step is within a separate vessel, the solids tend to float to the surface of the vessel allowing the solids to be taken off and passed in a more concentrated state to the activated sludge basin. Waste water tends to settle towards the bottom of the vessel where it may be drawn off and treated, for example, via a secondary clarifier or simply disposed of.

The depressurised returned sludge contains extra soluble carbon and nutrients which are then utilised by material within the activated sludge basin. Preferably the depressurisation step and pressurisation steps are not so vigorous as to completely remove the viable microorganisms within the pressurised and depressurised sludge. This means that fresh microorganisms are returned to the activated sludge basin which improves the function of the activated sludge basin.

The activated sludge basin may require additional oxygen added to it. Typically dissolved oxygen levels within the activated sludge need to be at least 1mg/l.

Additionally nitrification may be required, preferably at greater than 2mg/l. The maximum dissolved oxygen levels would normally be 8mg/l. The addition of nitrates and oxygen may be carried out using conventional methods such as oxygen or air blown into the tank or alternatively diffusers or other agitators to stir the surface of the material and encourage oxygen to be incorporated into the activated sludge.

Additional additives may be included such as hydrogen peroxide, surface active compounds, sodium hydrochloride etc to the pressurised or depressurised sludge before it is returned to the activated sludge basin. This may be utilised, for example, to improve the dispersion of the material alternatively to reduce the number of unwanted microorganisms within the material.

## Claims

1. A process for the treatment of an effluent stream comprising:
(i) passing the effluent stream into an activated sludge basin;
(ii) removing at least a portion of activated sludge from the activated sludge basin;
(iii) pressurising at least a portion of the removed activated sludge in the presence of a gas to form pressurised activated sludge;
(iv) flash depressurising the pressurised activated sludge to form depressurised sludge; and
(v) returning at least a portion of the depressurised sludge to the activated sludge basin.

2. A process according to claim 1, wherein the gas is carbon dioxide.

3. A process according to claim 1 or claim 2, wherein pressurisation and depressurisation are controlled to retain at least a portion of viable microorganisms in the depressurised sludge.

4. A process according to any preceding claim, comprising the step of adding oxygen to the depressurised sludge.

5. A process according to any preceding claim, wherein the depressurised sludge is added to activated sludge and further effluent stream in the activated sludge basin.

6. A process according to any preceding claim, wherein at least a portion of the depressurised sludge is separated into a concentrated sludge layer which is passed to the activated sludge basin and an aqueous layer which is separated for further treatment or disposal.

7. An apparatus for use in a method according to any preceding claims comprising an activated sludge basin, the activated sludge basin comprising an inlet port for receiving a flow of an effluent stream, an inlet port for receiving depressurised sludge and an outlet port, wherein the outlet port is connected to a secondary clarifier, which in turn is connected to a pressurisation chamber, the pressurisation chamber is then connected to a flash depressurisation chamber, wherein the flash depressurisation chamber is connected to the inlet port for receiving the depressurised sludge.

8. An apparatus according to claim 7, wherein a residence chamber is provided between the pressurisation chamber and the flash pressurisation chamber.
